# EUROPEAN PATENT APPLICATION

(11) **EP 1 186 886 A2**
(43) Date of publication of application: **13.03.2002**
(21) Application number: 01120514.3
(22) Date of filing: 28.08.2001
(51) Int. Cl.: G01N 27/447

(54) **Biochemical analyzing method and biochemical analysis apparatus used therefor**

(30) Priority: 04.09.2000 JP 2000267449
(71) Applicant: FUJI PHOTO FILM CO., LTD., Kanagawa (JP)
(72) Inventor: Ogura, Nobuhiko, c/o Fuji Photo Film Co., Ltd., Ashigarakami-gun, Kanagawa (JP)
(74) Representative: Klunker . Schmitt-Nilson . Hirsch

(57) **Abstract**

A biochemical analyzing method includes the steps of fixing probes selected in advance on a substrate, binding a target with the probes using hybridization to capture the target, fractionating the captured target, detecting the fractionated target, and quantitatively analyzing the detected target. According to this biochemical analyzing method, it is possible to reliably separate substances derived from a living organism other than the target, detect only the target and accurately perform a quantitative analysis in the case of fixing probes on a substrate, binding a target which is a substance derived from a living organism with the probes fixed on the substrate utilizing hybridization or antigen-antibody reaction, detecting the target and performing quantitative analysis, even when substances derived from a living organism other than the target are bound with the probes due to similarity in structure in addition to the target or instead of the target.

## Description

### BACKGROUND OF THE INVENTION

The present invention relates to a biochemical analyzing method, a biochemical analysis apparatus, a biochemical analysis unit used therefor and a target detecting apparatus for detecting a target from the biochemical analysis unit, and particularly, to a biochemical analyzing method, a biochemical analysis apparatus, and a biochemical analysis unit used therefor which can reliably separate substances derived from a living organism other than the target, detect only the target and accurately perform a quantitative analysis in the case of fixing probes on a substrate, binding a target which is a substance derived from a living organism with the probes fixed on the substrate utilizing hybridization or antigen-antibody reaction, detecting the target and performing quantitative analysis, even when substances derived from a living organism other than the target are bound with the probes due to similarity in structure in addition to the target or instead of the target, and a target detecting apparatus capable of detecting the target carried by the biochemical analysis unit.

### DESCRIPTION OF THE PRIOR ART

An autoradiographic analyzing system using as a detecting material for detecting radiation a stimulable phosphor which can absorb, store and record the energy of radiation when it is irradiated with radiation and which, when it is then stimulated by an electromagnetic wave having a specified wavelength, can release stimulated emission whose light amount corresponds to the amount of radiation with which it was irradiated is known, which comprises the steps of introducing a radioactively labeled substance into an organism, using the organism or a part of the tissue of the organism as a specimen, superimposing the specimen and a stimulable phosphor sheet formed with a stimulable phosphor layer for a certain period of time, storing and recording radiation energy in a stimulable phosphor contained in the stimulable phosphor layer, scanning the stimulable phosphor layer with an electromagnetic wave to excite the stimulable phosphor, photoelectrically detecting the stimulated emission released from the stimulable phosphor to produce digital image signals, effecting image processing on the obtained digital image signals, and reproducing an image on displaying means such as a CRT or the like or a photographic film (see, for example, Japanese Patent Publication No. 1-60784, Japanese Patent Publication No. 1-60782, Japanese Patent Publication No. 4-3952 and the like).

Unlike the system using a photographic film, according to the autoradiographic analyzing system using the stimulable phosphor as a detecting material for an image, development, which is chemical processing, becomes unnecessary. Further, it is possible reproduce a desired image by effecting image processing on the obtained image data and effect quantitative analysis using a computer. Use of a stimulable phosphor in these processes is therefore advantageous.

On the other hand, a fluorescence analyzing system using a fluorescent substance as a labeling substance instead of a radioactively labeling substance in the autoradiographic analyzing system is known. According to this system, it is possible, by detecting fluorescence emission released from a fluorescent substance to study a genetic sequence, study the expression level of a gene, and to effect separation or identification of protein or estimation of the molecular weight or properties of protein or the like. For example, this system can perform a process including the steps of distributing a plurality of DNA fragments on a gel support by means of electrophoresis after a fluorescent dye was added to a solution containing a plurality of DNA fragments to be distributed, or distributing a plurality of DNA fragments on a gel support containing a fluorescent dye, or dipping a gel support on which a plurality of DNA fragments have been distributed by means of electrophoresis in a solution containing a fluorescent dye, thereby labeling the electrophoresed DNA fragments, exciting the fluorescent dye by a stimulating ray to cause it to release fluorescence emission, detecting the released fluorescence emission to produce an image and detecting the distribution of the DNA fragments on the gel support. This system can also perform a process including the steps of distributing a plurality of DNA fragments on a gel support by means of electrophoresis, denaturing the DNA fragments, transferring at least a part of the denatured DNA fragments onto a transfer support such as a nitrocellulose support by the Southern-blotting method, hybridizing a probe prepared by labeling target DNA and DNA or RNA complementary thereto with the denatured DNA fragments, thereby selectively labeling only the DNA fragments complementary to the probe DNA or probe RNA, exciting the fluorescent dye by a stimulating ray to cause it to release fluorescence emission, detecting the released fluorescence emission to produce an image and detecting the distribution of the target DNA on the transfer support. This system can further perform a process including the steps of preparing a DNA probe complementary to DNA containing a target gene labeled by a labeling substance, hybridizing it with DNA on a transfer support, combining an enzyme with the complementary DNA labeled by a labeling substance, causing the enzyme to contact a fluorescent substance, transforming the fluorescent substance to a fluorescent substance having fluorescence emission releasing property, exciting the thus produced fluorescent substance by a stimulating ray to release fluorescence emission, detecting the fluorescence emission to produce an image and detecting the distribution of the target DNA on the transfer support. This fluorescence analyzing system is advantageous in that a genetic sequence or the like can be easily detected without using a radioactive substance.

Further, a micro-array analyzing system has been recently developed, which comprises the steps of using a spotter device to drop at different positions on the surface of a carrier such as a slide glass plate, a membrane filter or the like, a specific binding substance, which can specifically bind with a substance derived from a living organism such as a cell, a virus, a hormone, a tumor marker, enzyme, antibody, antigen, abzyme, other protein, a nuclear acid, cDNA, DNA, RNA and the like and whose sequence, base length, composition and the like are known, thereby forming a number of independent spots, hybridizing the specific binding substance with a substance derived from a living organism such as a cell, a virus, a hormone, a tumor marker, enzyme, antibody, antigen, abzyme, other protein, a nuclear acid, cDNA, DNA or mRNA, which is gathered from a living organism by extraction, isolation or the like or is further subjected to chemical processing, chemical modification or the like and which is labeled with a labeling substance such as a fluorescent substance, dye or the like, thereby forming a micro-array, irradiating the micro-array with a stimulating ray, photoelectrically detecting light such as fluorescence emission emitted from a labeling substance such as a fluorescent substance, dye or the like, and analyzing a target as the substance derived from a living organism. This micro-array image detecting system is advantageous in that a substance derived from a living organism can be analyzed in a short time period by forming a number of spots of a specific binding substance at different positions of the surface of a carrier such as a slide glass plate, a membrane filter or the like with high density and hybridizing them with a substance derived from a living organism and labeled with a labeling substance.

In addition, a macro-array analyzing system using a radioactive labeling substance as a labeling substance has been further developed, which comprises the steps of using a spotting device to drop at different positions on the surface of a carrier such as a membrane filter or the like specific binding substances, which can specifically bind with a substance derived from a living organism such as a cell, a virus, a hormone, tumor marker, enzyme, antibody, antigen, abzyme, other protein, a nuclear acid, cDNA, DNA, RNA or the like and whose sequence, base length, composition and the like are known, thereby forming a number of independent spots, specifically binding the specific binding substance using a hybridization method or the like with a substance derived from a living organism such as a cell, a virus, a hormone, tumor marker, enzyme, antibody, antigen, abzyme, other protein, a nuclear acid, cDNA, DNA or mRNA, which is gathered from a living organism by extraction, isolation or the like or is further subjected to chemical processing, chemical modification or the like and which is labeled with a radioactive labeling substance, thereby forming a macro-array, superposing the macro-array and a stimulable phosphor sheet formed with a stimulable phosphor layer, exposing the stimulable phosphor layer to a radioactive labeling substance, irradiating the stimulable phosphor layer with a stimulating ray to excite the stimulable phosphor, photoelectrically detecting the stimulated emission released from the stimulable phosphor to produce biochemical analysis data, and analyzing the substance derived from a living organism.

In the micro-array analyzing system or the macro-array analyzing system, when a micro-array or a macro-array is produced by hybridizing probes as specifically binding substances spotted on the surface of a carrier such as a slide glass plate, a membrane filter or the like with a target labeled with a labeling substance such as a fluorescent substance, dye or the like, a substance derived from a living organism other than the target may be bound to the probes in addition to the target or instead of the target due to similarity in structure and the like. In such a case, when the micro-array or the macro-array is irradiated with a stimulating ray and light such as fluorescent emission released from the labeling substance such as a fluorescent substance, dye or the like is photoelectrically detected, thereby quantitatively analyzing the target as a substance derived from a living organism, noise is generated and, therefore, the accuracy of analysis is lowered.

### SUMMARY OF THE INVENTION

It is therefore an object of the present invention to provide a biochemical analyzing method, a biochemical analysis apparatus and a biochemical analysis unit used therefor which can reliably separate substances derived from a living organism other than the target, detect only the target and accurately perform a quantitative analysis in the case of fixing probes on a substrate, binding a target which is a substance derived from a living organism with the probes fixed on the substrate utilizing hybridization or antigen-antibody reaction, detecting the target and performing quantitative analysis, even when substances derived from a living organism other than the target are bound with the probes due to similarity in structure in addition to the target or instead of the target, and a target detecting apparatus capable of detecting the target carried by the biochemical analysis unit.

The above other objects of the present invention can be accomplished by a biochemical analyzing method comprising the steps of fixing probes selected in advance on a substrate, binding a target with the probes using a specific binding reaction to capture the target, fractionating the captured target, detecting the fractionated target and quantitatively analyzing the detected target.

According to the present invention, since the respective targets captured by the probes using a specific binding reaction are fractionated, even when substances derived from a living organism other than the target are bound with the probes due to similarity in structure in addition to the target or instead of the target, it is possible to reliably separate substances derived from a living organism other than the target, thereby detecting only the target, and accurately perform quantitative analysis.

In a preferred aspect of the present invention, the target is bound with the probes using hybridization.

In a preferred aspect of the present invention, the respective captured targets are electrophoresed, thereby being fractionated.

According to this preferred aspect of the present invention, the respective targets captured by the probes can be reliably fractionated by electrophoresing them. Therefore, even when substances derived from a living organism other than the target are bound with the probes due to similarity in structure in addition to the target or instead of the target, it is possible to reliably separate substances derived from a living organism other than the target, thereby detecting only the target, and accurately perform quantitative analysis.

In a further preferred aspect of the present invention, the respective captured targets are electrophoresed in a direction at an angle with the surface of the substrate, thereby being fractionated.

According to this preferred aspect of the present invention, since the respective targets captured by the probes can be reliably fractionated by electrophoresing them in a direction at an angle with the surface of the substrate, even when substances derived from a living organism other than the target are bound with the probes due to similarity in structure in addition to the target or instead of the target, it is possible to reliably separate substances derived from a living organism other than the target, thereby detecting only the target, and accurately perform quantitative analysis.

In a further preferred aspect of the present invention, the respective captured targets are electrophoresed in gel adjacent to the substrate, thereby being fractionated.

In a further preferred aspect of the present invention, the respective captured targets are electrophoresed in a block of gel adjacent to the substrate, thereby being fractionated.

In another preferred aspect of the present invention, the respective captured targets are electrophoresed in a plurality of capillaries adjacent to the substrate, thereby being fractionated.

In a further preferred aspect of the present invention, the plurality of capillaries are filled with a material capable of forming a membrane filter or a gel.

In a further preferred aspect of the present invention, the probes are one-dimensionally spotted on the substrate to form a plurality of spots and are fixed thereon.

In a further preferred aspect of the present invention, the probes are two-dimensionally spotted on the substrate to form a plurality of spots and are fixed thereon.

In a further preferred aspect of the present invention, the target consists of a gene.

In a further preferred aspect of the present invention, the biochemical analyzing method further comprises a step of labeling the target with a fluorescent substance.

According to this preferred aspect of the present invention, it is possible to quantitatively analyze the target by detecting fluorescence emission released from the fluorescent substance.

In a further preferred aspect of the present invention, the target is labeled with the fluorescent substance prior to binding the target with the probes.

In a further preferred aspect of the present invention, the target is labeled with the fluorescent substance after the respective targets were fractionated.

In a further preferred aspect of the present invention, the biochemical analyzing method further comprises a step of labeling the target with a labeling substance which generates chemiluminescent emission when it contacts a chemiluminescent substrate.

According to this preferred aspect of the present invention, it is possible to quantitatively analyze the target by detecting chemiluminescent emission released from the fluorescent substance.

In a further preferred aspect of the present invention, the target is labeled with a labeling substance which generates chemiluminescent emission when it contacts a chemiluminescent substrate prior to binding the target with the probes.

In another preferred aspect of the present invention, the target is labeled with a labeling substance which generates chemiluminescent emission when it contacts a chemiluminescent substrate after the respective targets were fractionated.

In a further preferred aspect of the present invention, the fractionated targets are two-dimensionally scanned and light released from the targets is detected, thereby performing quantitative analysis

In a further preferred aspect of the present invention, light released from the fractionated targets is face-like detected and quantitative analysis is performed.

In a further preferred aspect of the present invention, the fractionated targets are three-dimensionally scanned and light released from the targets is detected, thereby performing quantitative analysis.

In a further preferred aspect of the present invention, the targets electrophoresed to positions in accordance with the kinds of the targets are quantified and analyzed.

According to this preferred aspect of the present invention, since the distances of electrophoresed targets to be quantitatively analyzed are known, it is possible to perform quantitative analysis by quantifying the targets electrophoresed to positions in accordance with the kinds of the targets.

The above and other objects of the present invention can be also accomplished by a biochemical analysis unit comprising an electrophoresis section to which voltage can be applied and in which probes bound with a target using a specific binding reaction can be electrophoresed in a depth direction thereof.

According to the present invention, since the electrophoresis section is formed so that voltage can be applied thereto and that the probes bound with a target using a specific binding reaction can be electrophoresed therein in a depth direction thereof, even when substances derived from a living organism other than the target are bound with the probes due to similarity in structure in addition to the target or instead of the target, it is possible to reliably separate substances derived from a living organism other than the target by applying voltage to the electrophoresis section and electrophoresing the probes bound with the target in the electrophoresis section in the depth direction thereof, thereby detecting only the target and accurately perform quantitative analysis.

In a preferred aspect of the present invention, the electrophoresis section is constituted so that the probes bound with a target using hybridization or antigen-antibody reaction can be electrophoresed therein in a depth direction thereof.

In a preferred aspect of the present invention, the electrophoresis section includes gel.

In a further preferred aspect of the present invention, the electrophoresis section is constituted as a block of gel.

In another preferred aspect of the present invention, the electrophoresis section is provided with a plurality of capillaries.

According to this preferred aspect of the present invention, even when substances derived from a living organism other than the target are bound with the probes due to similarity in structure in addition to the target or instead of the target, it is possible to reliably separate substances derived from a living organism other than the target by applying voltage to the electrophoresis section and electrophoresing the probes bound with the target in the plurality of capillaries, thereby detecting only the target and accurately perform quantitative analysis.

In a further preferred aspect of the present invention, the plurality of capillaries are filled with a material capable of forming a membrane filter or a gel.

In a further preferred aspect of the present invention, the biochemical analysis unit further comprises a substrate on which at least one kind of probe can be fixed.

In a further preferred aspect of the present invention, the substrate is constituted so as to bind the at least one kind of probe fixed thereon with a target using a specific binding reaction.

In a further preferred aspect of the present invention, the substrate is constituted so as to bind the at least one kind of probe fixed thereon with a target using hybridization or antigen-antibody reaction.

In a further preferred aspect of the present invention, the substrate and the electrophoresis section are constituted so that the at least one kind of probe fixed on the substrate and bound with the target can be electrophoresed in the electrophoresis section.

According to this preferred aspect of the present invention, since the substrate and the electrophoresis section are constituted so that the at least one kind of probe fixed on the substrate and bound with the target can be electrophoresed in the electrophoresis section, even when substances derived from a living organism other than the target are bound with the probes due to similarity in structure in addition to the target or instead of the target, it is possible to reliably separate substances derived from a living organism other than the target by applying voltage to the electrophoresis section without transferring the probe bound with the target to the electrophoresis section and electrophoresing the probes bound with the target in the depth direction thereof, thereby detecting only the target and accurately perform quantitative analysis.

In a further preferred aspect of the present invention, the substrate is formed with a plurality of membrane filters each being in contact with the electrophoresis section.

In a further preferred aspect of the present invention, the plurality of membrane filters are formed one-dimensionally.

In another preferred aspect of the present invention, the plurality of membrane filters are formed two-dimensionally.

The above and other objects of the present invention can be also accomplished by a target detecting apparatus comprising at least one laser stimulating ray source, a stage on which the biochemical analysis unit can be placed, a scanning mechanism for three-dimensionally scanning and stimulating the biochemical analysis unit with a laser beam emitted from the at least one laser stimulating ray source, a light detector for photoelectrically detecting light released from the biochemical analysis unit, and a confocal optical system for leading light released from the biochemical analysis unit to the light detector.

According to this aspect of the present invention, since the biochemical analysis unit is three-dimensionally scanned with the laser beam emitted from the laser stimulating ray source and light released from the biochemical analysis unit is led to the light detector using the confocal optical system, it is possible to lead only light released from three-dimensionally distributed targets by being captured by two-dimensionally spotted probes and electrophoresed in the electrophoresis section to the light detector, photoelectrically detect it and detect the targets with a high S/N ratio.

The above and other objects of the present invention can be also accomplished by a target detecting apparatus comprising at least one laser stimulating ray source, a stage on which the biochemical analysis unit can be placed, a scanning mechanism for two-dimensionally scanning and stimulating the biochemical analysis unit with a laser beam emitted from the at least one laser stimulating ray source, a light detector for photoelectrically detecting light released from the biochemical analysis unit, and a confocal optical system for leading light released from the biochemical analysis unit to the light detector.

According to this aspect of the present invention, since the biochemical analysis unit is three-dimensionally scanned with the laser beam emitted from the laser stimulating ray source and light released from the biochemical analysis unit is led to the light detector using the confocal optical system, it is possible to lead only light released from two-dimensionally distributed targets by being captured by one-dimensionally spotted probes and electrophoresed in the electrophoresis section to the light detector, photoelectrically detect it and detect the targets with a high S/N ratio.

In a preferred aspect of the present invention, the at least one laser stimulating ray source is constituted as a femtosecond pulse laser stimulating ray source.

According to this preferred aspect of the present invention, since the femtosecond pulse laser stimulating ray source is employed as the at least one laser stimulating ray source and a labeling substance such as a fluorescent substance can be excited utilizing two-photon excitation phenomena, decay of laser beam due to absorption and scattering thereof in the gel block or the capillaries is low and, therefore, it is possible to efficiently stimulate fluorescent substances located in deep regions in the gel block or the capillaries.

Further, it is generally known that energy of excited fluorescent substance molecules is lost by collision with dissolved oxygen, thereby generating active oxygen, and that fluorescent substances and specimens are damaged by active oxygen. In the case of single-photon excitation, such a phenomenon occurs in the specimen as a whole and if fluorescent substances are sequentially excited from those located in a shallow region in the gel block or the capillaries to those located in a deep region therein, when fluorescent substances located in a deep region in the gel block or the capillaries are excited, since the fluorescent substances have been already damaged, it is often difficult to excite the fluorescent substances in a desired manner. However, according to this preferred aspect of the present invention, since fluorescent substances located in the gel block or the capillaries can be excited utilizing two-photon excitation phenomena, such a phenomenon occurs only in the vicinity of the focal point and, therefore, when fluorescent substances are sequentially excited from those located in a shallow region in the gel block or the capillaries to those located in a deep region therein, it is possible to excite fluorescent substances located in a deep region in the gel block or the capillaries in a desired manner.

The above and other objects of the present invention can be accomplished by a biochemical analysis apparatus comprising means for fixing probes selected in advance on a substrate, means for binding the probes with targets using a specific binding reaction and capturing them, means for fractionating the captured targets, means for detecting the fractionated targets, and means for quantitatively analyzing the detected targets.

According to the present invention, since the biochemical analysis apparatus includes the means for fractionating the targets captured by the probes using a specific binding reaction, even when substances derived from a living organism other than the target are bound with the probes due to similarity in structure in addition to the target or instead of the target, it is possible to reliably separate substances derived from a living organism other than the target, thereby detecting only the target, and accurately perform quantitative analysis.

In a preferred aspect of the present invention, the biochemical analysis apparatus includes the means for binding the probes with targets using hybridization or antigen-antibody reaction.

In the present invention, a specific binding reaction includes hybridization, antigen-antibody reaction, receptor-ligand reaction and the like.

The above and other objects and features of the present invention will become apparent from the following description made with reference to the accompanying drawings.

### BRIEF DESCRIPTION OF THE DRAWINGS

Figure 1 is a schematic perspective view showing a biochemical analysis data producing apparatus constituting a biochemical analysis apparatus which is a preferred embodiment of the present invention
Figure 2 is a schematic perspective view showing a biochemical analysis unit.
Figure 3 is a schematic perspective view showing a DNA micro-array.
Figure 4 is a schematic front view showing a confocal switching member.
Figure 5 is a block diagram of a detection system, a drive system, an input system and a control system of a biochemical analysis data producing apparatus constituting a biochemical analysis apparatus which is a preferred embodiment of the present invention.
Figure 6 is a schematic front view showing a biochemical analysis unit which is another preferred embodiment of the present invention.
Figure 7 is a schematic front view showing a biochemical analysis unit which is a further preferred embodiment of the present invention.
Figure 8 is a schematic perspective view showing a biochemical analysis data producing apparatus constituting a biochemical analysis apparatus which is another preferred embodiment of the present invention.

### DESCRIPTION OF THE PREFERRED EMBODIMENT

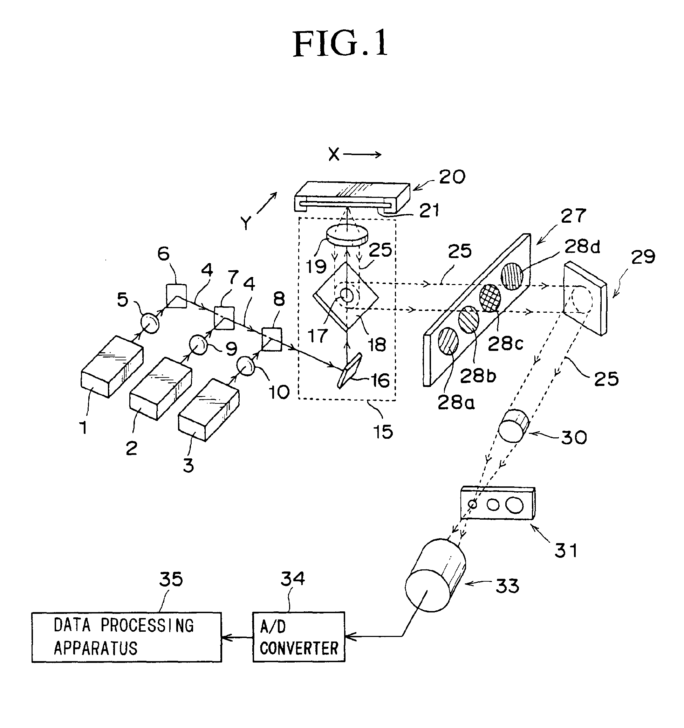

Figure 1 is a schematic perspective view showing a biochemical analysis data producing apparatus constituting a biochemical analysis apparatus which is a preferred embodiment of the present invention.

As shown in Figure 1, the biochemical analysis data producing apparatus constituting a biochemical analysis apparatus according to this embodiment includes a first laser stimulating ray source 1 for emitting a laser beam having a wavelength of 640nm, a second laser stimulating ray source 2 for emitting a laser beam having a wavelength of 532nm and a third laser stimulating ray source 3 for emitting a laser beam having a wavelength of 473nm. In this embodiment, the first laser stimulating ray source 1 is constituted by a semiconductor laser beam source and the second laser stimulating ray source 2 and the third laser stimulating ray source 3 are constituted by second harmonic generation elements.

A laser beam 4 emitted from the first laser stimulating source 1 passes through a collimator lens 5, thereby being made a parallel beam and is reflected by a mirror 6. A first dichroic mirror 7 for transmitting light having a wavelength of 640 nm but reflecting light having a wavelength of 532nm and a second dichroic mirror 8 for transmitting light having a wavelength equal to and longer than 532 nm but reflecting light having a wavelength of 473 nm are provided in an optical path of the laser beam 4 reflected by the mirror 6. The laser beam 4 emitted from the first laser stimulating ray source 1 passes through the first dichroic mirror 7 and the second dichroic mirror 8 and enters an optical head 15.

On the other hand, the laser beam 4 emitted from the second laser stimulating ray source 2 passes through a collimator lens 9, thereby being made a parallel beam and is reflected by the first dichroic mirror 7, thereby changing its direction by 90 degrees. The laser beam 4 then passes through the second dichroic mirror 8 and enters the optical head 15.

Further, the laser beam 4 emitted from the third laser stimulating ray source 3 passes through a collimator lens 10, thereby being made a parallel beam and is reflected by the second dichroic mirror 8, thereby changing its direction by 90 degrees.

The optical head 15 includes a mirror 16, a perforated mirror 18 whose center portion is formed with a hole 17 and a lens 19. The laser beam 4 impinging on the optical head 15 is reflected by the mirror 16 and passes through the hole 17 formed in the perforated mirror 18 and the lens 19, thereby entering a biochemical analysis unit 21 set on a stage 20.

The stage 20 is constituted so as to be movable in the X and Y directions in Figure 1, and, on the other hand, the optical head 15 is constituted so as to be movable in the Z direction perpendicular to the X and Y directions in Figure 1.

The biochemical analysis data producing apparatus according to this embodiment is constituted so as to read fluorescence data of a fluorescent dye carried in a DNA micro-array, electrophoresis data of a fluorescent dye carried in a gel support or a transfer support and autoradiographic data regarding locational information of a radioactive labeling substance recorded in a stimulable phosphor layer formed on a stimulable phosphor sheet, thereby producing biochemical analysis data and, therefore, three kinds of biochemical analysis units 21 are prepared for use.

Figure 12 shows a gel support or a transfer support carrying electrophoresis data of a fluorescent dye or a stimulable phosphor sheet carrying autoradiographic data regarding locational information of a radioactive labeling substance as a biochemical analysis unit 21.

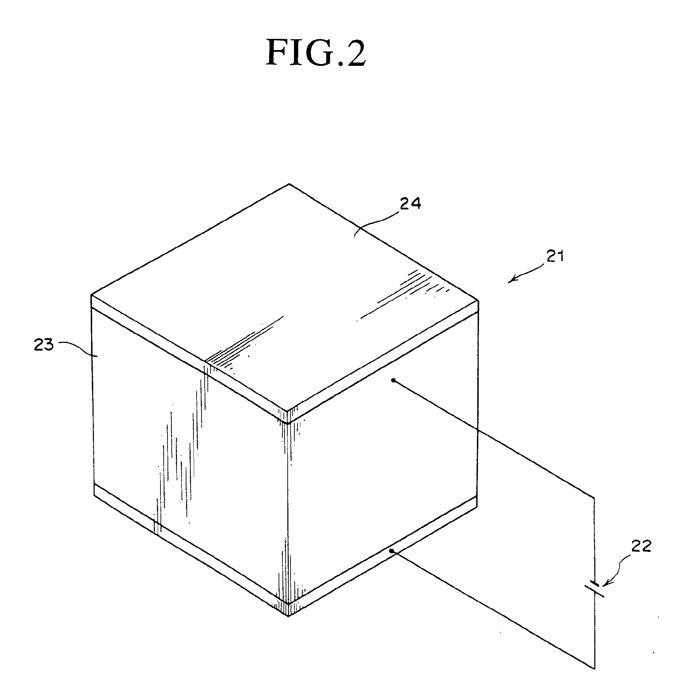

Figure 2 is a schematic perspective view showing a biochemical analysis unit.

As shown in Figure 2, the biochemical analysis unit 21 according to this embodiment includes a cuboid-like gel block 23 connected to a direct current source 22 and a DNA micro-array 24 is placed on the surface of the gel block 23 connected to an anode so as to be in close contact therewith.

A DNA micro-array 24 is prepared in the following manner, for example.

First, the surface of a slide glass plate is pretreated with a poly-L-lysine solution and so forth, and then cDNAs which are specific binding substances, each of which has a known base sequence and is different from the others, are spotted onto predetermined positions on the surface of the slide glass plate by using a spotter device.

On the other hand, a specimen of mRNA is extracted from biological cells, and RNA having poly A at 3' terminal is extracted from the mRNA. Then, cDNA is synthesized from the thus extracted RNA having poly A at 3' terminal in the presence of a labeling substance, Cy5 (registered trademark), to prepare a probe DNA labeled with Cy5.

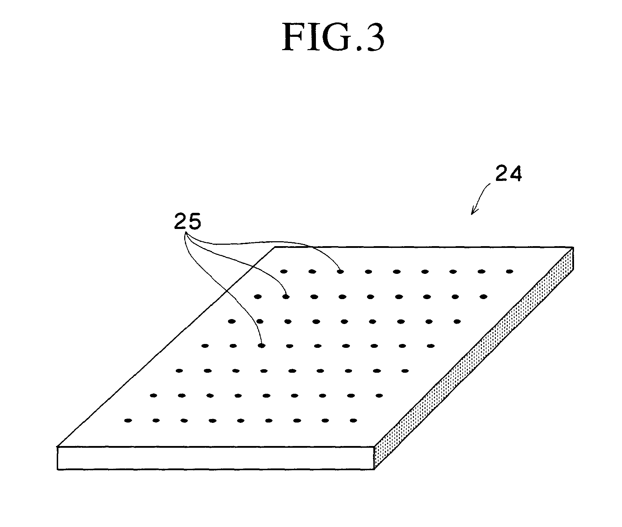

A solution of the thus obtained probe DNA labeled with Cy5 is prepared, and is gently loaded onto the surface of the slide glass on which cDNAs, specific binding substances, are spotted, and then hybridization is performed. Figure 3 is a schematic perspective view of a DNA micro-array 24. The reference numeral 26 in Figure 3 designates thus spotted cDNA.

In the thus prepared DNA micro-array 24, a probe DNA not intended to be bound with the spotted cDNA, a specific binding substance, may be bound with cDNA due to the similarity in structure and the like, in addition to a probe DNA intended to be bound with the cDNA or instead of a probe DNA intended to be bound with the cDNA.

As the number of probe DNAs labeled with Cy5 and bound with cDNA, a specific binding substance, becomes greater, the intensity of fluorescence emission released from the spotted cDNA 26 becomes greater when Cy5 is excited by the laser beam 4. Therefore, in the case where a probe DNA not intended to be bound with the spotted cDNA, a specific binding substance, does bind with cDNA in addition to a probe DNA intended to be bound with the cDNA or instead of a probe DNA intended to be bound with the cDNA, noise is inevitably generated in biochemical analysis data obtained by scanning the DNA micro-array 24 with the laser beam 4 and photoelectrically detecting released fluorescence emission and this lowers the accuracy of analysis performed based on the thus produced biochemical analysis data.

Therefore, this embodiment is constituted so as to form the biochemical analysis unit 21 by bringing the DNA micro-array 24 formed with spots 26 into close contact with the surface of the gel block 23 connected to the anode, applying voltage to the gel block 23 to electrophorese the combined body of the cDNA and the probe DNA contained in the spot 26 in the gel block 23, thereby fractionating other spots 26, stimulating the combined body of the cDNA and the probe DNA with the laser beam 4, photoelectrically detecting released fluorescence emission to produce biochemical analysis data, and effecting analysis based on the thus obtained biochemical analysis data.

More specifically, the DNA micro-array 24 formed with spots 26 of cDNAs and hybridized with probe DNAs labeled with Cy5 is placed on the gel block 23 so that the surface with the spots 26 are in close contact with the side surface of the gel block 23 connected to the anode of the direct current source 22 and voltage is applied to the gel block 23 so as to cross it.

As a result, the combined bodies of the cDNAs and the DNA probes are electrophoresed in the gel block 23, thereby being moved in the depth direction of the gel block 23 and are three-dimensionally distributed in accordance with the molecular weight thereof, whereby the spots 26 are fractionated.

Therefore, if reference data are experimentally produced in advance by electrophoresing respective specimens in the gel block 23 and detecting a three-dimensional distribution of respective electrophoresed specimens, it is possible to separate cDNAs to which a probe cDNA not intended to be bound with the cDNAs is bound therewith in addition to a probe DNA intended to be bound therewith or instead of a probe DNA intended to be bound therewith by comparing the result of electrophoresing the combined bodies of the cDNAs and the probe DNAs and the reference data, thereby improving the accuracy of analysis.

On the other hand, electrophoresis data of denatured DNA fragments labeled with a fluorescent dye is, for example, recorded in a transfer support in the following manner.

First, a plurality of DNA fragments containing a specific gene are separated and distributed on a gel support medium by means of electrophoresis and are denatured by alkali processing to form single-stranded DNA.

Then, according to the known Southern blotting method, the gel support and a transfer support are stacked to transfer at least a part of the denatured DNA ragments onto the transfer support and the transferred DNA fragments are fixed on the transfer support by heating and irradiating with an ultraviolet ray.

Further, probes prepared by labeling DNA or RNA with fluorescent dye, which is complementary to the DNA containing the specific gene, and the denatured DNA fragments on the transfer support are hybridized by heating to form double-stranded DNA fragments or combined DNA and RNA. Then, DNA or RNA which is complementary to the DNA containing DNA of the specific gene is labeled with a fluorescent dye such as Fluorescein, Rhodamine or Cy5 to prepare the probes. Since the denatured DNA fragments are fixed on the transfer support at this time, only the DNA fragments which are complimentary to the probe DNA or probe RNA are hybridized to acquire the fluorescently labeled probe. Then, the probes which have not formed hybrids are removed by washing with a proper solution and only the DNA fragments having a specific gene form hybrids with the fluorescently labeled DNA or RNA on the transfer support to be fluorescently labeled. The thus obtained transfer support records an electrophoresis image of the denatured DNA labeled with fluorescent dye.

Further, locational information regarding a radioactive labeling substance is recorded in a stimulable phosphor layer formed on a stimulable sheet in following manner. Locational information as termed here includes a variety of information relating to the location of radioactive labeled substances, or aggregations thereof, present in a specimen, such as the location, the shape, the concentration, the distribution or combinations thereof.

When locational information regarding a radioactively labeling substance, for example, in a gene obtained using a Southern blot-hybridization method is to be recorded in the stimulable phosphor layer formed on the stimulable sheet, first, a plurality of DNA fragments containing a specific gene are separated and distributed on a gel support medium by means of electrophoresis and are denatured by alkali processing to form single-stranded DNA.

Then, according to the known Southern blotting method, the gel support and a transfer support such as a nitrocellulose filter are stacked to transfer at least a part of the denatured DNA fragments onto the transfer support and the transferred DNA fragments are fixed on the transfer support by heating and irradiating with an ultraviolet beam.

Further, probes prepared by radioactively labeling DNA or RNA which is complementary to the DNA containing the specific gene and the denatured DNA fragments are hybridized by heating to form double-stranded DNA fragments or combined DNA and RNA. Since the denatured DNA fragments are fixed on the transfer support at this time, only the DNA fragments which are complimentary to the probe DNA or probe RNA are hybridized to acquire the radioactively labeled probe.

Then, the probes which have not formed hybrids are removed by washing with a proper solution and only the DNA fragments having a specific gene form hybrids with the radioactively labeled DNA or RNA on the transfer support to be radioactively labeled. The thus obtained transfer support is dried and the transfer support and the stimulable phosphor sheet are stacked for a certain period of time to expose the stimulable phosphor layer, and at least a part of the radiation emitted from the radioactively labeling substance on the transfer support is absorbed in the stimulable phosphor layer formed on the stimulable phosphor sheet, whereby the locational information regarding the radioactively labeled substance in the specimen is stored in the stimulable phosphor layer.

When the laser beam 4 impinges on the biochemical analysis unit 21 from the optical head 15, a fluorescent substance is excited by the laser beam 4 to release fluorescence emission or stimulable phosphors contained in the stimulable phosphor sheet are excited by the laser beam 4 to release stimulated emission.

The fluorescence emission or the stimulated emission 25 released from the biochemical analysis unit 21 is made into a parallel beam by the lens 19 of the optical head 15 and reflected by the perforated mirror 18, thereby entering one of filters 28a, 28b, 28c and 28d of a filter unit 27.

The filter unit 27 is constituted to be laterally movable in Figure 1 by a motor (not shown) so that a predetermined one of the filters 28a, 28b, 28c and 28d is located in the optical path of the fluorescence emission or the stimulated emission 25 depending upon the kind of the laser stimulating ray source to be used.

The filter 28a is used for reading fluorescence emission released from a fluorescent substance contained in the biochemical analysis unit 21 upon being excited using the first laser stimulating ray source 1 and has a property to cut off light having a wavelength of 640 nm but transmit light having a wavelength longer than 640 nm. The filter 28b is used for reading fluorescence emission released from a fluorescent substance contained in the biochemical analysis unit 21 upon being excited using the second laser stimulating ray source 2 and has a property to cut off light having a wavelength of 532 nm but transmit light having a wavelength longer than 532 nm. The filter 28c is used for reading fluorescence emission released from a fluorescent substance contained in the biochemical analysis unit 21 upon being excited using the third laser stimulating ray source 3 and has a property to cut off light having a wavelength of 473 nm but transmit light having a wavelength longer than 473 nm. The filter 28d is used in the case where the biochemical analysis unit 21 is a stimulable phosphor sheet for reading stimulated emission released from stimulable phosphor contained in the stimulable phosphor sheet upon being excited using the first laser stimulating ray source 1 and has a property to transmit only light having a wavelength corresponding to that of stimulated emission emitted from stimulable phosphor but cut off light having a wavelength of 640 nm. Therefore, in accordance with the kind of the stimulating ray source to be used, namely, depending upon whether the biochemical analysis unit 21 carries fluorescence data or autoradiographic data regarding locational information of a radioactively labeling substance and the kind of fluorescent substance labeling a specimen, one of these filters 28a, 28b, 28c, 28d is selectively used, thereby cutting light of wavelengths which cause noise.

After the fluorescence emission or stimulated emission 25 passes through one of the filters 28a, 28b, 28c, 28d, whereby light of a predetermined wavelength region is cut, the fluorescence emission or stimulated emission advances to a mirror 29 and is reflected thereby to be focused by a lens 30.

The lens 19 and the lens 30 constitute a confocal optical system. The reason for employing a confocal optical system is to enable only a combined body of the cDNA and the DNA probe located at a specific position among combined bodies of the cDNAs and the DNA probes electrophoresed and three-dimensionally distributed in the gel block 23 to be stimulated with the laser beam 4 and fluorescence emission emitted from a fluorescent substance contained in the combined body of the cDNA and the DNA probe to be read with a high S/N ratio.

A confocal switching member 31 is provided at the focal point of the lens 30.

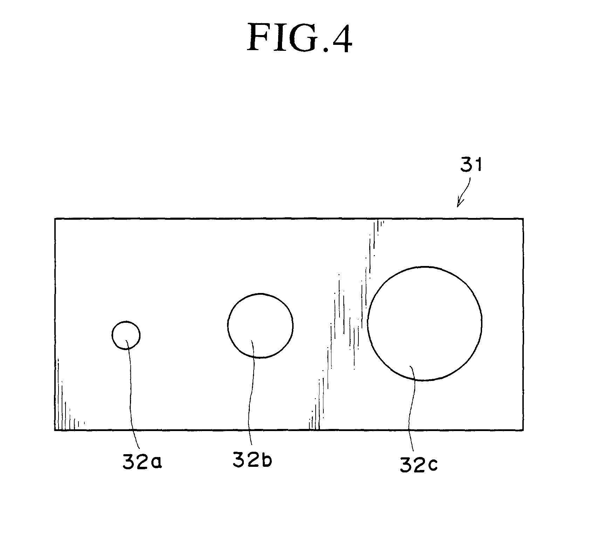

Figure 4 is a schematic front view showing the confocal switching member 31.

As shown in Figure 4, the confocal switching member 31 is formed plate-like and with three pinholes 32a, 32b, 32c. The pinhole 32a having the smallest diameter is located in the light path of fluorescence emission emitted from the gel block 23 when fluorescence emission released from a combined body of the cDNA and the DNA probe electrophoresed in the gel block 23 is photoelectrically detected to read fluorescence data, and the pinhole 32c having the largest diameter is located in the light path of fluorescence emission emitted from a transfer support or a gel support when fluorescence data carried in the transfer support or the gel support is to be read. Further, the pinhole 32b having an intermediate diameter is located in the light path of a stimulated emission released from a stimulable phosphor layer when autoradiographic data regarding locational information and recorded in the stimulable phosphor layer formed on a stimulable phosphor sheet is to be read.

In this manner, the confocal switching member 31 is provided at the focal point of the lens 30 and the pinhole 32a having the smallest diameter is located in the light path of fluorescence emission when fluorescence emission released from the combined body of the cDNA and the DNA probe spotted on the DNA micro-array 24 and electrophoresed in the gel block 23 is photoelectrically detected to read fluorescence data. This is because when the combined bodies of the cDNAs and the DNA probes are excited by the laser beam 4 and fluorescence emission released therefrom is photoelectrically detected, thereby reading a fluorescent image, the combined bodies of the cDNAs and the DNA probes are electrophoresed in the gel block 23, thereby being distributed over a wide range in the depth direction of the gel block 23 and it is necessary to detect fluorescence emission released from a light emitting point located at a specific depth in the gel block 23, so that it is preferable to use a confocal optical system to focus an image on the pinhole 32a having the smallest diameter for improving the S/N ratio.

On the other hand, the pinhole 32c is located in the light path of fluorescence emission when fluorescence data carried in the transfer support or the gel support are to be read. This is because when fluorescence data carried in the transfer support or the gel support are read by exciting a fluorescent substance using the laser beam 4, the positions of the light emitting points fluctuate in the depth direction because the fluorescent substance is distributed in the depth direction of the transfer support or the gel support, so that it is impossible to focus an image on a pinhole having a small diameter even when a confocal optical system is used, and fluorescence emission emitted from the specimen is cut if a pinhole having a small diameter is used, whereby signals having a sufficient intensity cannot be obtained and, therefore, it is necessary to use the pinhole 32c having the largest diameter.

When autoradiographic data regarding locational information and recorded in the stimulable phosphor layer formed on a stimulable phosphor sheet are to be read, the pinhole 32b having an intermediate diameter is located in the light path of a stimulated emission. This is because when autoradiographic data are read by exciting a stimulable phosphor contained in the stimulable phosphor layer using the laser beam 4, the positions of the light emitting points fluctuate in the depth direction because the light emitting points of a stimulated emission are distributed in the depth direction of the stimulable phosphor layer, so that it is impossible to focus an image on a pinhole having a small diameter even when a confocal optical system is used, and the stimulated emission emitted from the specimen is cut if a pinhole having a small diameter is used, whereby signals having a sufficient intensity cannot be obtained by photoelectrically detecting the stimulated emission but the distribution of the light emitting points in the depth direction and the fluctuation in positions of the light emitting points in the depth direction are no so great as those for reading a fluorescent image carried in the transfer support or the gel support and, therefore, it is preferable to employ the pinhole 32b having an intermediate diameter.

The fluorescence emission or stimulated emission passing through the confocal switching member 31 is photoelectrically detected by a photomultiplier 33, thereby producing analog data. The analog data produced by the photomultiplier 33 are converted by an A/D converter 34 into digital data and the digital data are fed to a data processing apparatus 35.

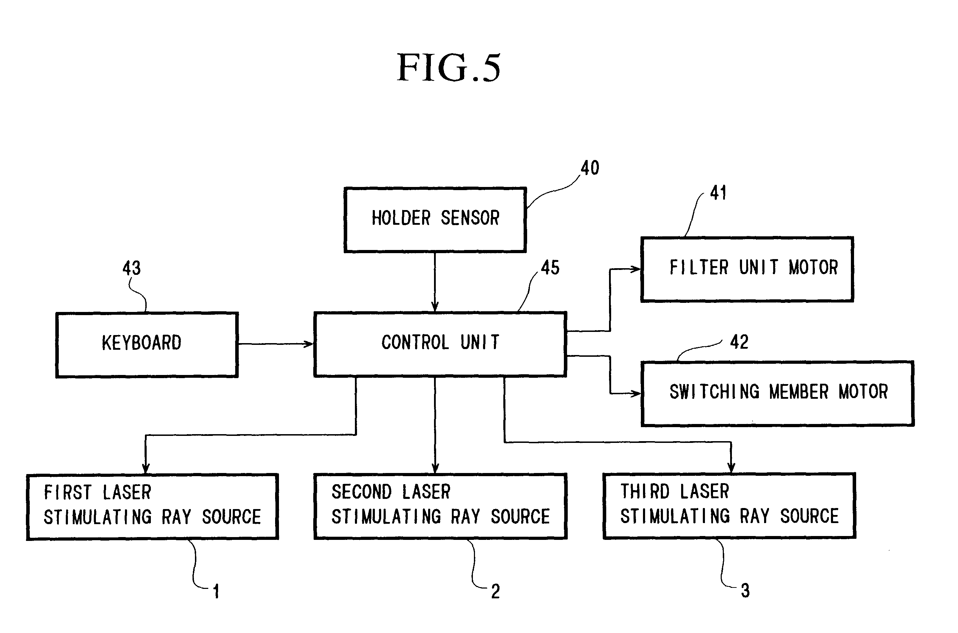

Figure 5 is a block diagram of a detection system, a drive system, an input system and a control system of the biochemical analysis data producing apparatus constituting the biochemical analysis apparatus which is a preferred embodiment of the present invention.

As shown in Figure 5, the detection system of the biochemical analysis data producing apparatus includes a holder sensor 40 for detecting the kind of holder set on the stage 20 for gripping a biochemical analysis unit 21, and the drive system of the biochemical analysis data producing apparatus includes a filter unit motor 41 for moving the filter unit 27 and a switching member motor 42 for moving the confocal switching member 31.

The input system of the biochemical analysis data producing apparatus includes a keyboard 43 and the control system of the biochemical analysis data producing apparatus includes a control unit 45.

The thus constituted biochemical analysis data producing apparatus according to this embodiment photoelectrically detects fluorescence emission released from combined bodies of cDNAs and DNA probes electrophoresed in the gel block 23 to read fluorescence data and produces digital data for biochemical analysis in the following manner.

When the gel block 23 in which combined bodies of cDNAs and DNA probes contained in spots 26 have been electrophoresed, whereby the spots 26 are fractionated from each other and the combined bodies of cDNAs and DNA probes are three-dimensionally distributed is set on the stage 20 as a biochemical analysis unit 21, the kind of holder (not shown) for gripping the biochemical analysis unit 21 is detected by the holder sensor 40 and a holder detection signal is output to the control unit 45.

When the control unit 45 receives the holder detection signal from the holder sensor 40, it outputs a drive signal to the switching member motor 42 based on the holder detection signal, thereby moving the confocal switching member 31 so that the pinhole 32a having the smallest diameter is located in the light path.

Then, the kind of fluorescent substance serving as a labeling substance and a start signal are input through the keyboard 43 by the operator and an instruction signal is output from the keyboard 43 to the control unit 45.

When the kind of fluorescent substance, for instance, Cy5, is input, the control unit 45 outputs a drive signal to the filter unit motor 41 in accordance with the input instruction signal, thereby moving the filter unit 27 so as to locate the filter 28a having a property to cut off light having a wavelength of 640 nm but transmit light having a wavelength longer than 640 nm in the light path and outputs a drive signal to the first laser stimulating ray source 1, thereby turning it on.

A laser beam 4 emitted from the first laser stimulating ray source 1 passes through the collimator lens 5, thereby being made a parallel beam and is reflected by the mirror 6. The laser beam 4 passes through the first dichroic mirror 7 and the second dichroic mirror 8 and enters the optical head 15.

The laser beam 4 entering the optical head 15 is reflected by the mirror 16, passes through the hole 17 formed in the perforated mirror 18 and is focused by the lens 19 at the focal point of the lens 19 in the gel block 23 set on the stage 20.

When the gel block 23 in which combined bodies of cDNAs and DNA probes contained in spots 26 have been electrophoresed, whereby the spots 26 are fractionated from each other and the combined bodies of cDNAs and DNA probes are three-dimensionally distributed is set on the stage 20 as a biochemical analysis unit 21, the control unit 45 relatively moves the stage 20 and the optical head 15 by the scanning mechanism (not shown) in the X, Y and Z directions in Figure 1 so that the combined bodies of cDNAs and DNA probes located at the focal point of the lens 19 among the combined bodies of cDNAs and DNA probes three-dimensionally distributed in the gel block 23 are sequentially scanned with the laser beam 4.

When the combined body of a cDNA and a probe DNA is irradiated with the laser beam 4, the fluorescent substance labeling the probe DNA, for example, Cy5, is excited, thereby releasing fluorescence emission.

The fluorescence emission emitted from a fluorescent substance contained in the combined body of a cDNA and a probe DNA located at the focal point of the lens 19 passes through the lens 19, thereby being made a parallel beam and is reflected by the perforated mirror 18, thereby entering the filter unit 27.

Since the filter unit 27 has been moved so that the filter 28a is located in the light path, the fluorescence emission enters the filter 28a, thereby cutting light having a wavelength of 640 nm and transmitting only light having a wavelength longer than 640 nm.

The fluorescence emission transmitted through the filter 28a is reflected by the mirror 29 and condensed by the lens 30.

Since the confocal switching member 31 has been moved so that the pinhole 32a having the smallest diameter is located in the light path prior to irradiation with the laser beam 4, the fluorescence emission is focused onto the pinhole 32a and is photoelectrically detected by the photomultiplier 33, thereby producing analog data.

Since fluorescence emission released from a fluorescent substance contained in the combined body of a cDNA and a probe DNA located at the focal point of the lens 19 among the combined bodies of cDNAs and DNA probes three-dimensionally distributed in the gel block 23 is led to the photomultiplier 33 in this manner, only fluorescence emission released from a fluorescent substance contained in the combined body of a cDNA and a probe DNA located at the focal point of the lens 19 can be photoelectrically detected and noise generated in the thus produced biochemical analysis data can be minimized.

The analog data produced by the photomultiplier 33 are converted into digital data by the A/D converter 34 and the digital data are fed to the data processing apparatus 35.

On the other hand, when fluorescence data carried in a transfer support or a gel support are to be read, the transfer support or the gel support is set on the stage 20 as a biochemical analysis unit 21.

When the transfer support or the gel support is set on the stage 20, the kind of holder (not shown) for gripping the biochemical analysis unit 21 is detected by the holder sensor 40 and a holder detection signal is output to the control unit 45.

When the control unit 45 receives the holder detection signal from the holder sensor 40, it outputs a drive signal to the switching member motor 42 based on the holder detection signal, thereby moving the confocal switching member 31 so that the pinhole 32c having the largest diameter is located in the light path.

Then, the kind of fluorescent substance serving as a labeling substance and a start signal are input through the keyboard 43 by the operator and an instruction signal is output from the keyboard 43 to the control unit 45.

When the kind of fluorescent substance, for instance, Fluorescein (registered trademark), is input, the control unit 45 outputs a drive signal to the filter unit motor 41 in accordance with the input instruction signal, thereby moving the filter unit 27 so as to locate the filter 28c having a property to cut off light having a wavelength of 473 nm but transmit light having a wavelength longer than 473 nm in the light path and outputs a drive signal to the third laser stimulating ray source 3, thereby turning it on.

A laser beam 4 emitted from the third laser stimulating ray source 3 passes through a collimator lens 10, thereby being made a parallel beam and is reflected by the second dichroic mirror 8, thereby entering the optical head 15.

The laser beam 4 entering the optical head 15 is reflected by the mirror 16, passes through the hole 17 formed in the perforated mirror 18 and is focused by the lens 19 at the focal point of the lens 19 in the transfer support or the gel support set on the stage 20.

When the transfer support or the gel support is set on the stage 20 as a biochemical analysis unit 21, the stage 20 is moved in only the X and Y directions in Figure 1 by a scanning mechanism (not shown) so that the entire surface of the transfer support or the gel support is scanned with the laser beam 4.

When the transfer support or the gel support is irradiated with the laser beam 4, the fluorescent substance labeling the denatured DNA, for example, Fluorescein, is excited, thereby releasing fluorescence emission. In the case of the transfer support or the gel support, since the fluorescent substance is distributed in the depth direction of the transfer support or the gel support, fluorescence emission is released from a predetermined region in the depth direction of the transfer support or the gel support and the positions of light emitting points vary in the depth direction.

The fluorescence emission emitted from the transfer support or the gel support passes through the lens 19, thereby being made a parallel beam and is reflected by the perforated mirror 18, thereby entering the filter unit 27.

Since the filter unit 27 has been moved so that the filter 28c is located in the light path, the fluorescence emission enters the filter 28c, thereby cutting light having a wavelength of 473 nm and transmitting only light having a wavelength longer than 473 nm.

The fluorescence emission transmitted through the filter 28c is reflected by the mirror 29 and condensed by the lens 30. However, since the fluorescence emission is released from the predetermined region in the depth direction of the transfer support or the gel support, it is not focused.

Since the confocal switching member 31 has been moved so that the pinhole 32c having the largest diameter is located in the light path prior to irradiation with the laser beam 4, the fluorescence emission passes through the pinhole 32c having the largest diameter and is photoelectrically detected by the photomultiplier 33, thereby producing analog data. Therefore, notwithstanding that the confocal optical system is employed for detecting fluorescence emission released from a fluorescent substance contained in the combined bodies of cDNAs and probe DNAs three-dimensionally in the gel block 23 with a high S/N ratio, the fluorescence emission emitted from the predetermined region in the depth direction of the transfer support or the gel support can be detected with a high signal intensity.

The analog data produced by the photomultiplier 33 are converted into digital data by the A/D converter 34 and the digital data are fed to the data processing apparatus 35.

Further, when autoradiographic data regarding locational information and recorded in the stimulable phosphor layer formed on a stimulable phosphor sheet are to be read, a stimulable phosphor sheet is set on the stage 20 as a biochemical analysis unit 21.

When the stimulable phosphor sheet is set on the stage 20, the kind of holder (not shown) for gripping the biochemical analysis unit 21 is detected by the holder sensor 40 and a holder detection signal is output to the control unit 45.

When the control unit 45 receives the holder detection signal from the holder sensor 40, it outputs a drive signal to the switching member motor 42 based on the holder detection signal, thereby moving the confocal switching member 31 so that the pinhole 32b having an intermediate diameter is located in the light path.

Then, an instruction signal indicating that the biochemical analysis unit 21 is a stimulable phosphor sheet and a start signal are input through the keyboard 43 by the operator and instruction signals are output from the keyboard 43 to the control unit 45.

When the control unit 45 receives the instruction signal indicating that the biochemical analysis unit 21 is a stimulable phosphor sheet, it outputs a drive signal to the filter unit motor, thereby moving the filter unit 27 so as to locate the filter 28d having a property to transmit only light having a wavelength corresponding to that of stimulated emission emitted from stimulable phosphor but cut off light having a wavelength of 640 nm in the light path, and outputs a drive signal to the first laser stimulating ray source 1, thereby turning it on.

A laser beam 4 emitted from the first laser stimulating ray source 1 passes through the collimator lens 5, thereby being made a parallel beam and is reflected by the mirror 6. The laser beam 4 passes through the first dichroic mirror 7 and the second dichroic mirror 8 and enters the optical head 15.

The laser beam 4 entering the optical head 15 is reflected by the mirror 16, passes through the hole 17 formed in the perforated mirror 18 and is focused by the lens 19 at the focal point of the lens 19 on the stimulable phosphor sheet set on the stage 20.

When the stimulable phosphor sheet is set on the stage as a biochemical analysis unit 21, the stage 20 is moved in only the X and Y directions in Figure 1 by a scanning mechanism (not shown) so that the entire surface of the stimulable phosphor layer formed on the stimulable phosphor sheet is scanned with the laser beam 4.

When the stimulable phosphor sheet is irradiated with the laser beam 4, the stimulable phosphor contained in the stimulable phosphor layer is stimulated, thereby releasing radiographic energy stored therein as a stimulated emission. In the case of the stimulable phosphor sheet, since the stimulable phosphor is contained in the stimulable phosphor layer and is distributed in the depth direction of the stimulable phosphor layer to some extent, the stimulated emission is released from a predetermined region in the depth direction of the stimulable phosphor layer and the positions of the light emitting points fluctuate in the depth direction. However, since the stimulable phosphor layer is thin, the light emitting points are not distributed over such a wide region in the depth direction as those of the transfer support or the gel support.

The stimulated emission released from the stimulable phosphor layer formed on the stimulable phosphor sheet passes through the lens 19, thereby being made a parallel beam and is reflected by the perforated mirror 18, thereby entering the filter unit 27.

Since the filter unit 27 has been moved so that the filter 28d is located in the light path, the stimulated emission enters the filter 28d, thereby cutting light having a wavelength of 640 nm and transmitting only light having a wavelength corresponding to that of stimulated emission emitted from stimulable phosphor.

The stimulated emission transmitted through the filter 28d is reflected by the mirror 29 and condensed by the lens 30. However, since the stimulated emission is released from the predetermined region in the depth direction of the stimulable phosphor layer formed on stimulable phosphor sheet, it is not focused.

Since the confocal switching member 31 has been moved so that the pinhole 32b having an intermediate diameter is located in the light path prior to irradiation with the laser beam 4, the stimulated emission passes through the pinhole 32b having the intermediate diameter and is photoelectrically detected by the photomultiplier 33, thereby producing analog data. Therefore, notwithstanding that the confocal optical system is employed for detecting fluorescence emission released from a fluorescent substance contained in the combined bodies of cDNAs and probe DNAs three-dimensionally in the gel block 23 with a high S/N ratio, the stimulated emission emitted from the predetermined region in the depth direction of the stimulable phosphor layer formed on the stimulable phosphor sheet can be detected with a high signal intensity.

The analog data produced by the photomultiplier 33 are converted into digital data by the A/D converter 34 and the digital data are fed to the data processing apparatus 35.

According to the above described embodiment, the DNA micro-array 24 formed with spots 26 of cDNAs, each being hybridized with a probe DNA labeled with Cy5, is placed on the side surface of the gel block 23 so that the surface of the DNA micro-array 24 is in close contact with the side surface of the gel block 23 connected to the anode of the direct current source 22 and voltage is applied to the gel block 23 so as to cross it and electrophorese the combined bodies of cDNAs and probe DNAs in the spots. The spots are therefore fractionated from each other and the combined bodies of cDNAs and probe DNAs are three-dimensionally distributed in the gel block 23. The thus three-dimensionally distributed combined bodies of cDNAs and probe DNAs in the gel block 23 are irradiated with the laser beam 4 so that fluorescence emission released from a fluorescent substance is detected and the thus obtained data are compared with the reference data experimentally produced in advance by electrophoresing respective specimens in the gel block 23 and detecting a three-dimensional distribution of the respective electrophoresed specimens. Therefore, since it is possible to separate cDNAs to which a probe cDNA not intended to be bound with the cDNAs is bound in addition to a probe DNA intended to be bound therewith or instead of a probe DNA intended to be bound therewith, noise can be prevented from being generated in biochemical analysis data, and since the result of electrophoresing the combined bodies of the cDNAs and the DNA probes is compared with the reference data, the accuracy of analysis can be markedly improved.

Further, according to the above described embodiment, since the lens 19 and the lens 30 constitute a confocal optical system, only fluorescence emission released from a fluorescent substance contained in the combined body of the cDNA and the probe DNA located at the focal point of the lens 19 in the gel block 23 by stimulating it can be reliably led onto the light receiving surface of the photomultiplier 33 and it is possible to read fluorescence data with a high S/N ratio.

Furthermore, according to the above described embodiment, the lens 19 and the lens 30 constitute a confocal optical system and when fluorescence emission released from a fluorescent substance contained in the combined body of the cDNA and the probe DNA is detected, a fluorescence emission is focused on the pinhole 32a having the smallest diameter and photoelectrically detected by the photomultiplier 33. Therefore, fluorescence emission released from fluorescent substances contained in the combined bodies of the cDNAs and the probe DNAs three-dimensionally distributed in the gel block 23 can be read with a high S/N ratio. On the other hand, when fluorescence data carried in a transfer support or a gel support are to be read by photoelectrically detecting fluorescence emission released from a predetermined region in the depth direction, the confocal switching member is moved so that the pinhole 32c having the largest diameter is located in the light path and when autoradiographic data regarding locational information and recorded in the stimulable phosphor layer formed on a stimulable phosphor sheet are to be read by photoelectrically detecting a stimulated emission released from a certain region in the depth direction, the confocal switching member is moved so that the pinhole 32b having an intermediate diameter is located in the light path. Therefore, the fluorescence emission or the stimulated emission is prevented from being cut and digital data having high signal intensity for biochemical analysis can be produced.

Furthermore, according to the above described embodiment, a holder sensor 40 is provided for detecting the kind of holder for supporting a biochemical analysis unit 21 and the confocal switching member 31 is automatically moved so that the appropriate pinhole 32a, 32b or 32c is located in the light path. Therefore, it is possible to prevent the operator from erroneously locating an improper pinhole 32a, 32b or 32c in the light path.

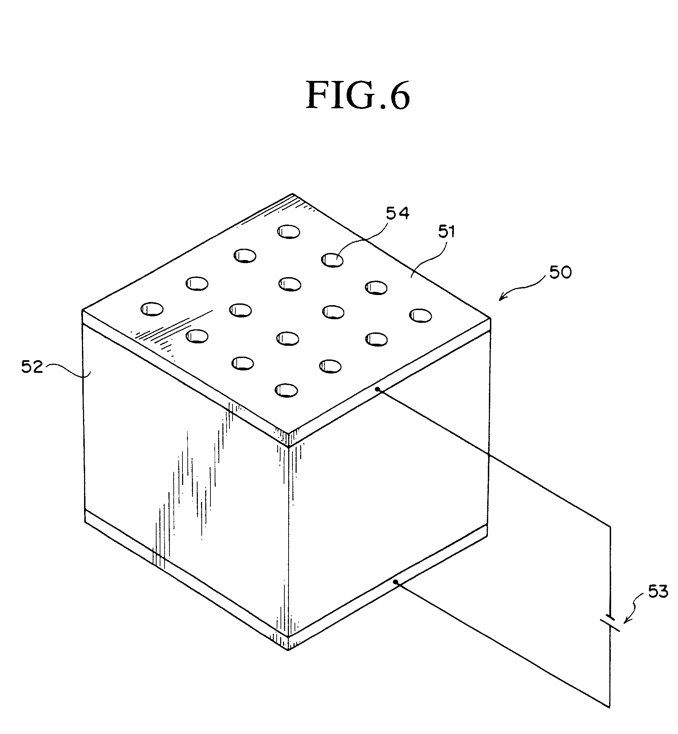

Figure 6 is a schematic front view showing a biochemical analysis unit which is another preferred embodiment of the present invention.

As shown in Figure 6, the biochemical analysis unit 50 according to this embodiment includes a micro-array 51 formed of glass, metal or the like, a gel block 52 and a direct current source 53. The micro-array 51 is formed with a plurality of spot-like circular membrane filters 54 two-dimensionally distributed and connected to an anode of the direct current source 53. The plurality of circular membrane filters 54 are in contact with the gel block 52.

In the biochemical analysis unit 50 according to this embodiment, a plurality of cDNAs which are specific binding substances, each of which has a known base sequence and is different from the others, are spotted onto the plurality of membrane filters 54 formed in the micro-array 51. On the other hand, a solution containing probe DNA labeled with Cy5 is prepared, and is gently loaded onto the surface of the micro-array 51 on which cDNAs, specific binding substances, are spotted, and then hybridization is performed, thereby forming combined bodies of cDNAs and probe DNAs on the micro-array 51.

As described above, when a cDNA and a prove DNA are hybridized with each other in this manner, a probe DNAs not intended to be bound with the spotted cDNA, a specific binding substance, may be bound with cDNA due to the similarity in structure and the like instead of a probe DNA intended to be bound with the cDNA or in addition to a probe DNA intended to be bound with the cDNA. This causes generation of noise in biochemical analysis data produced by scanning the micro-array 51 with the laser beam 4 and photoelectrically detecting released fluorescence emission and lowers the accuracy of analysis based on the thus produced biochemical analysis data.

Therefore, when the biochemical analysis unit 50 according to this embodiment is used, voltage is applied to the gel block 52 to electrophorese the combined bodies of cDNAs and probe DNAs contained in the membrane filters 54 in the gel block 52 by the applied voltage, thereby fractionating them, the thus electrophoresed combined bodies of cDNAs and probe DNAs are stimulated with the laser beam 4, released fluorescence emission is photoelectrically detected to produce biochemical analysis data, and analysis is effected based on the thus produced biochemical analysis data.

More specifically, when voltage is applied from the direct current source 53 to the gel block 53 so as to cross it, the combined bodies of cDNAs and probe DNAs contained in the membrane filters 54 are electrophoresed in the gel block 52 to be moved in the depth direction of the gel block 52 and three-dimensionally distributed in the gel block 52 in accordance with the molecular weight thereof.

As a result, cDNAs to which a probe cDNA not intended to be bound with the cDNAs is bound therewith in addition to a probe DNA intended to be bound therewith or instead of a probe DNA intended to be bound therewith can be separated. Therefore, if reference data are experimentally produced in advance by electrophoresing respective specimens in the gel block 52 and detecting the three-dimensional distribution of the respective electrophoresed specimens, then, by comparing the result of electrophoresing the combined bodies of the cDNAs and the DNA probes and the reference data, the accuracy of analysis can be improved. DNA intended to be bound therewith can be separated

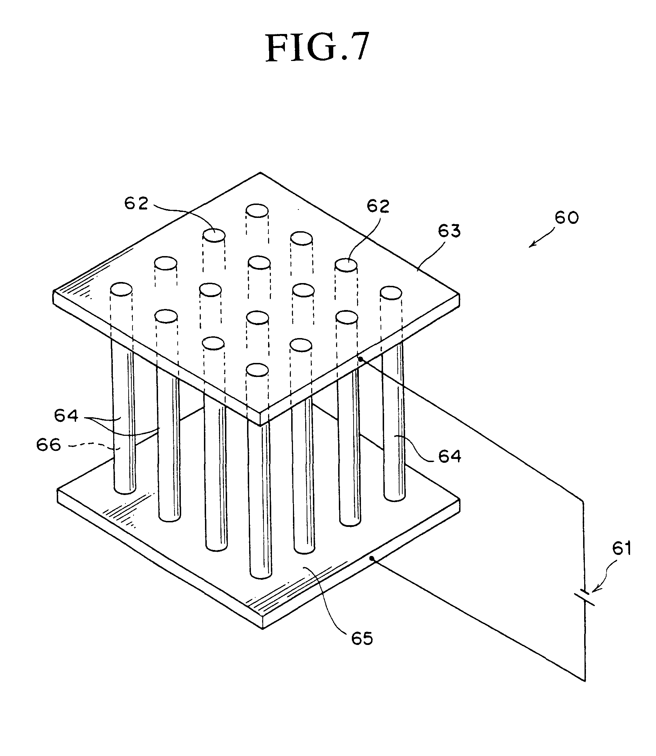

Figure 7 is a schematic front view showing a biochemical analysis unit which is a further preferred embodiment of the present invention.

As shown in Figure 7, the biochemical analysis unit 60 according to this embodiment includes an anode plate 63 connected to a direct current source 61 and formed with a plurality of openings 62 corresponding to the spots 26 of cDNAs and probe DNAs formed in the DNA micro-array 24, a plurality of capillaries 64 (only a part thereof is shown in Figure 7 for convenience of illustration) each connected to an opening 62 formed in the anode plate 63 at an opening formed at one end portion thereof, and a cathode plate 65 to which the other end portions of the plurality of capillaries 64 are connected. The capillaries 64 are formed of transparent glass or plastic and each capillary is filled with gel 66.

In the biochemical analysis unit 60 according to this embodiment, cDNAs to which a probe cDNA not intended to be bound with the cDNAs is bound therewith in addition to a probe DNA intended to be bound therewith or instead of a probe DNA intended to be bound therewith are separated in the following manner, thereby reducing noise in biochemical analysis data.

The DNA micro-array 24 formed with spots 26 of cDNAs and hybridized with probe DNAs labeled with Cy5 is placed on the anode plate 63 so that the spots 26 come into contact with the gel 66 filled in the capillaries 64 and voltage is applied by the direct current source 61 between the anode plate 63 and the cathode plate 65.

As a result, the combined bodies of cDNAs and probe DNAs are electrophoresed in the capillaries 64 to be moved in the longitudinal direction of the capillaries 64 and are distributed in the longitudinal direction of the capillaries 64 in accordance with the molecular weight thereof, thereby being fractionated.

As a result, cDNAs to which a probe cDNA not intended to be bound with the cDNAs is bound therewith in addition to a probe DNA intended to be bound therewith or instead of a probe DNA intended to be bound therewith can be separated. Therefore, if reference data are experimentally produced in advance by electrophoresing respective specimens in the capillaries 64 and detecting positions of the respective electrophoresed specimens in the longitudinal direction of the capillaries 64, then, by comparing the result of electrophoresing the combined bodies of the cDNAs and the DNA probes and the reference data, the accuracy of analysis can be improved.

Further, according to this embodiment, since the combined bodies of cDNAs and probe DNAs are electrophoresed in the transparent capillaries 64, it is possible to produce biochemical analysis data by photoelectrically detecting fluorescence emission released from fluorescent substances contained in the combined bodies of the cDNAs and the DNA probes using a line CCD or the like and reading fluorescence data.

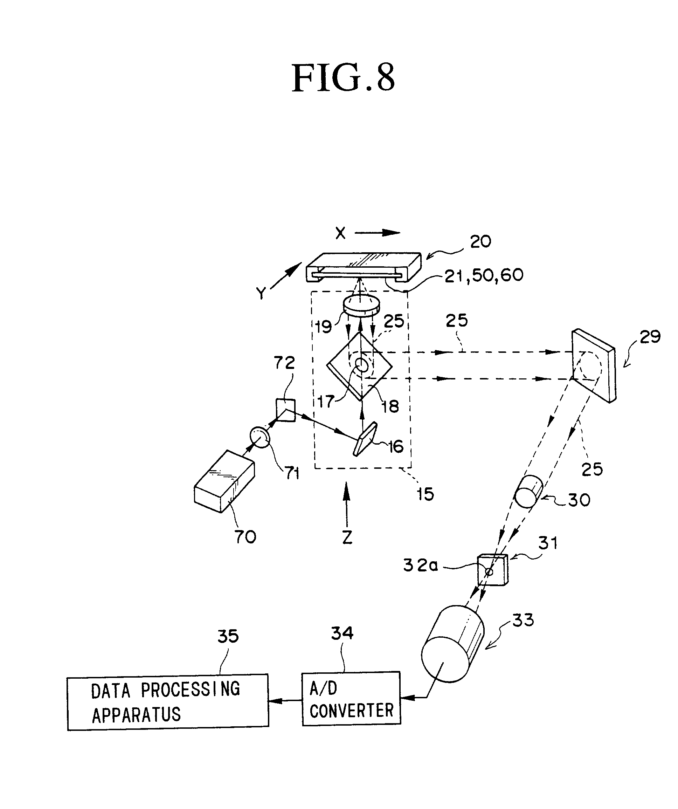

Figure 8 is a schematic perspective view showing a biochemical analysis data producing apparatus constituting a biochemical analysis apparatus which is another preferred embodiment of the present invention.

The biochemical analysis data producing apparatus shown in Figure 8 is constituted so as to read fluorescence data of a fluorescent dye carried in the biochemical analysis unit 21, 50, 60. In the biochemical analysis data producing apparatus according to this embodiment, a femtosecond pulse laser stimulating ray source 70 for emitting infrared light is provided instead of the first laser stimulating ray source 1 for emitting a laser beam 4 having a wavelength of 640nm, the second laser stimulating ray source 2 for emitting a laser beam 4 having a wavelength of 532 nm and the third laser stimulating ray source 3 for emitting a laser beam 4 having a wavelength of 473nm, and the combined bodies of the cDNAs and the DNA probes electrophoresed in the gel block 23, 52 or the capillaries 64 and distributed in the depth direction of the gel block 23, 52 or in the longitudinal direction of the capillaries 64 can be selectively stimulated utilizing two-photon excitation phenomena, thereby detecting fluorescence emission released from the combined bodies of the cDNAs and the DNA probes to produce biochemical analysis data.

In this embodiment, a fluorescent substance stimulable with a stimulating ray having a wavelength of about 400 nm when excited by two-photons and emitting fluorescence emission having a wavelength of about 500 nm is employed as a labeling substance and the femtosecond pulse laser stimulating ray source 70 is constituted so as to emit an infrared light having a wavelength of 800 nm. Therefore, the filter unit 27 includes only a filter (not shown) for cutting off light having a wavelength of 800 nm or longer and transmitting light having a wavelength of shorter than 800 nm and is constituted so as to be detachable, and the confocal switching member 31 is formed with only the smallest pinhole 32a. in Figure 8, the filter unit 27 is omitted.

The thus configured biochemical analysis data producing apparatus constituting the biochemical analysis apparatus according to this embodiment photoelectrically detects fluorescence emission released from the combined bodies of the cDNAs and the DNA probes electrophoresed in the gel block 23, 52 or the capillaries 64 to read fluorescence data and produce biochemical analysis data.

First, the biochemical analysis unit 21, 50 provided with the gel block 23, 52 in which the combined bodies of cDNAs and probe DNAs are electrophoresed and three-dimensionally distributed or the biochemical analysis unit 60 provided with the plurality of capillaries 64 in which the combined bodies of cDNAs and probe DNAs are electrophoresed and three-dimensionally distributed is set on the stage 20.

When an instruction signal is input by the operator through the keyboard 43, the control unit 45 actuates the femtosecond pulse laser stimulating ray source 70 and a laser beam 4 having a wavelength of 800 nm is emitted from the femtosecond pulse laser stimulating ray source 70.

The laser beam 4 emitted from the femtosecond pulse laser stimulating ray source 70 passes through a collimator lens 71, thereby being made a parallel beam and is reflected by a mirror 72 to enter the optical head 15.

The laser beam 4 entering the optical head 15 is reflected by the mirror 16 and passes through the hole 17 formed in the perforated mirror 18 and is focused by the lens 19 at focal point of the lens 19 in the gel block 23, 52 of the biochemical analysis unit 21, 50 or in the capillaries 64 of the biochemical analysis unit 60 set on the stage 20.

Since the control unit 45 is constituted so as to move the stage in the X and Y directions in Figure 8 by a scanning mechanism (not shown) and to move the optical head in the Z direction, the combined bodies of the cDNAs and the DNA probes located at the focal point of the lens 19 among the combined bodies of cDNAs and probe DNAs three-dimensionally distributed in the gel block 23, 52 of the biochemical analysis unit 21, 50 or the capillaries 64 of the biochemical analysis unit 60 are sequentially scanned with the laser beam 4.

When the combined body of a cDNA and a probe DNA is irradiated with the laser beam 4, a fluorescent substance labeling the probe DNA is excited and fluorescence emission having a wavelength of about 500 nm is released.

In this embodiment, the femtosecond pulse laser stimulating ray source 70 is employed as a laser stimulating ray source and a fluorescent substance is excited utilizing two-photon excitation phenomena. Therefore, since decay of laser beam 4 due to absorption and scattering thereof in the gel block 23, 52 or the capillaries 64 is low, it is possible to efficiently stimulate fluorescent substances located in deep regions in the gel block 23, 52 or the capillaries 64. Further, it is generally known that energy of excited fluorescent substance molecules is lost by collision with dissolved oxygen, thereby generating active oxygen and fluorescent substances, and that specimens are damaged by active oxygen. In the case of single-photon excitation, such a phenomenon occurs in the specimen as a whole and if fluorescent substances are sequentially excited from those located in a shallow region in the gel block 23, 52 or the capillaries 64 to those located in a deep region therein, when fluorescent substances located in a deep region in the gel block 23, 52 or the capillaries 64 are excited, since the fluorescent substances have been already damaged, it is often difficult to excite the fluorescent substances in a desired manner. However, in the case of two-photon excitation, since such a phenomenon occurs only in the vicinity of the focal point, when fluorescent substances are sequentially excited from those located in a shallow region in the gel block 23, 52 or the capillaries 64 to those located in a deep region therein, it is possible to excite fluorescent substances located in a deep region in the gel block 23, 52 or the capillaries 64 in a desired manner.

Fluorescence emission released from fluorescent substances contained in the combined bodies of cDNAs and DNA probes located at the focal point of the lens 19 passes through the lens 19, thereby being made a parallel beam and is reflected by the perforated mirror 18 to enter the filter (not shown) of the filter unit 27.

Since the filter has a property to cut off light having a wavelength of 800 nm or longer but transmit light having a wavelength longer than shorter than 800 nm, light having a wavelength of the laser beam 4 is cut off and only fluorescence emission having a wavelength of 800 nm or longer is transmitted.

The fluorescence emission transmitted through the filter is reflected by the mirror 29 and focused by the lens 30.

As a result, the fluorescence emission is focused onto the smallest pinhole 32a of the confocal switching member 31 and photoelectrically detected by the photomultiplier 33 to produce analog data.

Since fluorescence emission released from a fluorescent substance contained in the combined body of a cDNA and a probe DNA located at the focal point of the lens 19 among the combined bodies of cDNAs and DNA probes three-dimensionally distributed in the gel block 23, 52 of the biochemical analysis unit 21, 50 or capillaries 64 of the biochemical analysis unit 60 is led to the photomultiplier 33 in this manner, only fluorescence emission released from a fluorescent substance contained in the combined body of a cDNA and a probe DNA located at the focal point of the lens 19 can be photoelectrically detected and noise generated in the thus produced biochemical analysis data can be minimized.

The analog data produced by the photomultiplier 33 are converted into digital data by the A/D converter 34 and the digital data are fed to the data processing apparatus 35.

According to this embodiment, similarly to the above described embodiments, it is possible to separate cDNAs to which a probe cDNA not intended to be bound with the cDNAs is bound therewith in addition to a probe DNA intended to be bound therewith or instead of a probe DNA intended to be bound therewith, thereby improving the accuracy of analysis. Further, since the femtosecond pulse laser stimulating ray source 70 is employed as a laser stimulating ray source and fluorescent substances are excited utilizing the two-photon excitation phenomena, decay of laser beam 4 due to absorption and scattering thereof in the gel block 23, 52 or the capillaries 64 is low, and, therefore, it is possible to efficiently stimulate fluorescent substances located in deep regions in the gel block 23, 52 or the capillaries 64.

Furthermore, it is known that energy of excited fluorescent substance molecules is lost by collision with dissolved oxygen, thereby generating active oxygen, and that fluorescent substances and specimens are damaged by active oxygen. In the case of single-photon excitation, such a phenomenon occurs in the specimen as a whole and if fluorescent substances are sequentially excited from those located in a shallow region in the gel block 23, 52 or the capillaries 64 to those located in a deep region therein, when fluorescent substances located in a deep region in the gel block 23, 52 or the capillaries 64 are excited, since the fluorescent substances have been already damaged, it is often difficult to excite the fluorescent substances in a desired manner. However, according to this embodiment, since fluorescent substances located in the gel block 23, 52 or the capillaries 64 are excited utilizing the two-photon excitation phenomena, such a phenomenon occurs only in the vicinity of the focal point and, therefore, when fluorescent substances are sequentially excited from those located in a shallow region in the gel block 23, 52 or the capillaries 64 to those located in a deep region therein, it is possible to excite fluorescent substances located in a deep region in the gel block 23, 52 or the capillaries 64 in a desired manner.

The present invention has thus been shown and described with reference to specific embodiments. However, it should be noted that the present invention is in no way limited to the details of the described arrangements but changes and modifications may be made without departing from the scope of the appended claims.

For example, the above described embodiments were explained with regard to production of biochemical analysis data by the steps of spotting cDNAs which are specific binding substances, each of which has a known base sequence and is different from the others onto predetermined positions on the surface of the slide glass plate or a plurality of membrane filters 54 formed in the micro-array 51, extracting a specimen of mRNA from biological cells, extracting RNA having poly A at 3' terminal from mRNA, synthesizing cDNA from the thus extracted RNA having poly A at 3' terminal in the presence of a labeling substance, Cy5, preparing probe DNA labeled with Cy5, preparing a solution of the thus obtained probe DNA labeled with Cy5, gently loading the solution onto the surface of the slide glass on which cDNAs, specific binding substances, are spotted, thereby performing hybridization, producing fluorescence data, and reading fluorescence data. However, the present invention is in no way limited to biochemical analysis data produced in such a manner but can be widely applied to production of biochemical analysis data by reading fluorescence data produced by the steps of spotting at different positions on the surface of a slide glass plate or a plurality of membrane filters 54 formed in the micro-array 51 a specific binding substance which can specifically bind with a substance derived from a living organism such as a cell, a virus, a hormone, a tumor marker, enzyme, antibody, antigen, abzyme, other protein, a nuclear acid, cDNA, DNA, RNA and the like and whose sequence, base length, composition and the like are known, thereby forming a number of independent spots, and hybridizing the specific binding substance with a substance derived from a living organism such as a cell, a virus, a hormone, a tumor marker, enzyme, antibody, antigen, abzyme, otherprotein, a nuclear acid, cDNA, DNA, mRNA, which is gathered from a living organism by extraction, isolation or the like or is further subjected to chemical processing, chemical modification or the like and is labeled with a labeling substance such as a fluorescent substance.

Moreover, in the embodiment shown in Figure 6, although a plurality of spot-like circular membrane filters 54 are formed two-dimensionally in the micro-array 51, the plurality of membrane filters 54 may be formed one-dimensionally in the micro-array 51.

Further, in the embodiment shown in Figure 6, although the micro-array 51 is formed with a plurality of spot-like circular membrane filters 54, gel may be spot-like formed in the micro-array 51.

Moreover, in the embodiment shown in Figures 1 to 7, the biochemical analysis data producing apparatus constituting the biochemical apparatus is constituted so as to read fluorescence data of a fluorescent dye carried in the micro-array, electrophoresis data of a fluorescent dye recorded in a gel support or a transfer support and autoradiographic data regarding locational information of a radioactive labeling substance recorded in a stimulable phosphor layer formed on a stimulable phosphor sheet. However, it is not absolutely necessary for the biochemical analysis data producing apparatus to be constituted so as to read electrophoresis data of a fluorescent dye recorded in a gel support or a transfer support and autoradiographic data regarding locational information of a radioactive labeling substance recorded in a stimulable phosphor layer formed on a stimulable phosphor sheet but it is sufficient for the biochemical analysis data producing apparatus to be able to read fluorescence data of a fluorescent dye carried in the micro-array.

Moreover, in the embodiment shown in Figures 1 to 7, although the biochemical analysis data producing apparatus constituting the biochemical analysis apparatus includes the first laser stimulating ray source 1, the second laser stimulating ray source 2 and the third laser stimulating ray source 3, it is not absolutely necessary for the biochemical analysis data producing apparatus to include three laser stimulating ray sources and it is sufficient for the biochemical analysis data producing apparatus to be able to efficiently stimulate a fluorescent substance used for producing fluorescence data carried in the micro-array and read fluorescence data.

Further, in the embodiment shown in Figures 1 to 7, although a semiconductor laser beam source for emitting a laser beam 4 having a wavelength of 640 nm is employed as the first laser stimulating ray source 1, a He-Ne laser beam source for emitting a laser beam 4 having a wavelength of 633 nm or a semiconductor laser beam source for emitting a laser beam 4 having a wavelength of 635 nm may be employed instead of the semiconductor laser beam source for emitting a laser beam 4 having a wavelength of 640 nm.

Moreover, in the embodiment shown in Figure 1 to 7, a laser beam source for emitting a laser beam 4 having a wavelength of 532 nm is used as the second laser stimulating ray source 2 and a laser beam source for emitting a laser beam 4 having a wavelength of 473 nm is used as the third laser stimulating ray source 3. However, depending upon the kind of fluorescent substance, a laser beam source for emitting a laser beam 4 having a wavelength of 530 to 540 nm may be used as the second laser stimulating ray source 2 and a laser beam source for emitting a laser beam 4 having a wavelength of 470 to 480 nm may be used as the third laser stimulating ray source 3.

Further, in the above described embodiment, labeling substances contained in the biochemical analysis unit 21 are excited with a laser beam 4 by moving the stage 20 using a scanning mechanism in the X and Y directions or the X, Y and Z directions in accordance with the kind of the biochemical analysis unit 21. However, the optical head 15 may be moved in the X and Y directions or the X, Y and Z directions in Figure 1, while the stage is held stationary. Further, fluorescent substances contained in the biochemical analysis unit 21 may be excited with the laser beam 4 by moving the optical head 15 in only the Z direction and moving the stage 20 in the X and Y directions or moving the optical head 15 in the X and Y directions in Figure 1 and moving the stage 20 in the Z direction.

Furthermore, although the perforated mirror 18 formed with the hole 17 is used in the above described embodiments, the mirror can be formed with a coating capable of transmitting the laser beam 4 instead of the hole 17.

Moreover, the photomultiplier 33 or a line CCD is employed as a light detector to photoelectrically detect fluorescence emission or stimulated emission released from the biochemical analysis unit 21 in the above described embodiments. However, it is sufficient for the light detector used in the present invention to be able to photoelectrically detect fluorescence emission or stimulated emission and it is possible to employ a light detector such as a two-dimensional CCD instead of the photomultiplier 33 or the line CCD.

Further, in the embodiment shown in Figure 8, although the stage 20 is moved in the X and Y directions in Figure 1 by a scanning mechanism and the optical head 15 is moved in the Z direction, fluorescent substances contained in the biochemical analysis unit 21, 50, 60 may be excited with the laser beam 4 by moving the laser beam 4 in the X and Y directions using a resonance type galvanometer mirror and moving the stage 20 in the Z direction using a scanning mechanism.

According to the present invention, it is possible to provide a biochemical analyzing method, a biochemical analysis apparatus and a biochemical analysis unit used therefor which can reliably separate substances derived from a living organism other than the target, detect only the target and accurately perform a quantitative analysis in the case of fixing probes on a substrate, binding a target which is a substance derived from a living organism with the probes fixed on the substrate utilizing hybridization or antigen-antibody reaction, detecting the target and performing quantitative analysis, even when substances derived from a living organism other than the target are bound with the probes due to similarity in structure in addition to the target or instead of the target, and a target detecting apparatus capable of detecting the target carried by the biochemical analysis unit.

## Claims

1. A biochemical analyzing method comprising the steps of
fixing probes selected in advance on a substrate,
binding a target with the probes using a specific binding reaction to capture the target,
fractionating the captured target, detecting the fractionated target, and
quantitatively analyzing the detected target.

2. A biochemical analyzing method in accordance with Claim 1, wherein the target is bound with the probes using hybridization.

3. A biochemical analyzing method in accordance with Claim 1 or 2, wherein the respective captured targets are electrophoresed, thereby being fractionated.

4. A biochemical analyzing method in accordance with Claim 3, wherein the respective captured targets are electrophoresed in a direction at an angle with the surface of the substrate, thereby being fractionated.

5. A biochemical analyzing method in accordance with Claim 3 or 4, wherein the respective captured targets are electrophoresed in gel adjacent to the substrate, thereby being fractionated.

6. A biochemical analyzing method in accordance with Claim 5, wherein the respective captured targets are electrophoresed in a block of gel adjacent to the substrate, thereby being fractionated.

7. A biochemical analyzing method in accordance with Claim 3 or 4, wherein the respective captured targets are electrophoresed in a plurality of capillaries adjacent to the substrate, thereby being fractionated.

8. A biochemical analyzing method in accordance with Claim 7, wherein the plurality of capillaries are filled with a material capable of forming a membrane filter or a gel.

9. A biochemical analyzing method in accordance with any one of Claims 1 to 8, wherein the probes are spotted on the substrate and fixed thereon.

10. A biochemical analyzing method in accordance with Claim 9, wherein the probes are one-dimensionally spotted on the substrate to form a plurality of spots and are fixed thereon.

11. A biochemical analyzing method in accordance with Claim 9, wherein the probes are two-dimensionally spotted on the substrate to form a plurality of spots and are fixed thereon.

12. A biochemical analyzing method in accordance with any one of Claims 1 to 11, wherein the target consists of a gene.

13. A biochemical analyzing method in accordance with any one of Claims 1 to 12 which further comprises a step of labeling the target with a fluorescent substance.

14. A biochemical analyzing method in accordance with Claim 13, wherein the target is labeled with the fluorescent substance prior to binding the target with the probes.

15. A biochemical analyzing method in accordance with Claim 13, wherein the target is labeled with the fluorescent substance after the respective targets were fractionated.

16. A biochemical analyzing method in accordance with any one of Claims 1 to 12 which further comprises a step of labeling the target with a labeling substance which generates chemiluminescent emission when it contacts a chemiluminescent substrate.

17. A biochemical analyzing method in accordance with Claim 16, wherein the target is labeled with a labeling substance which generates chemiluminescent emission when it contacts a chemiluminescent substrate prior to binding the target with the probes.

18. A biochemical analyzing method in accordance with Claim 16, wherein the target is labeled with a labeling substance which generates chemiluminescent emission when it contacts a chemiluminescent substrate after the respective targets were fractionated.

19. A biochemical analyzing method in accordance with any one of Claims 10 to 18, wherein the fractionated targets are two-dimensionally scanned and light released from the targets is detected, thereby performing quantitative analysis.

20. A biochemical analyzing method in accordance with any one of Claims 10 to 18, wherein light released from the fractionated targets is face-like detected and quantitative analysis is performed.

21. A biochemical analyzing method in accordance with any one of Claims 11 to 18, wherein the fractionated targets are three-dimensionally scanned and light released from the targets is detected, thereby performing quantitative analysis.

22. A biochemical analyzing method in accordance with any one of Claims 3 to 21, wherein targets electrophoresed to positions in accordance with the kinds of the targets are quantified and analyzed.

23. A biochemical analysis unit comprising an electrophoresis section to which voltage can be applied and in which probes bound with a target using a specific binding reaction can be electrophoresed in a depth direction thereof.

24. A biochemical analysis unit in accordance with Claim 23, wherein the electrophoresis section is constituted so that the probes bound with a target using hybridization or antigen-antibody reaction can be electrophoresed therein in a depth direction thereof.

25. A biochemical analysis unit in accordance with Claim 23 or 24, wherein the electrophoresis section includes gel.

26. A biochemical analysis unit in accordance with Claim 25, wherein the electrophoresis section is constituted as a block of gel.

27. A biochemical analysis unit in accordance with Claim 23 or 24, wherein the electrophoresis section is provided with a plurality of capillaries.

28. A biochemical analysis unit in accordance with Claim 27, wherein the plurality of capillaries are filled with a material capable of forming a membrane filter or a gel.

29. A biochemical analysis unit in accordance with any one of Claims 23 to 28 which further comprises a substrate on which at least one kind of probe can be fixed.

30. A biochemical analysis unit in accordance with Claim 29, wherein the substrate is constituted so as to bind the at least one kind of probe fixed thereon with a target using a specific binding reaction.

31. A biochemical analysis unit in accordance with Claim 30, wherein the substrate is constituted so as to bind the at least one kind of probe fixed thereon with a target using hybridization or antigen-antibody reaction.

32. A biochemical analysis unit in accordance with Claim 30 or 31, wherein the substrate and the electrophoresis section are constituted so that the at least one kind of probe fixed on the substrate and bound with the target can be electrophoresed in the electrophoresis section.

33. A biochemical analysis unit in accordance with Claim 32, wherein the substrate is formed with a plurality of membrane filters each being in contact with the electrophoresis section.

34. A biochemical analysis unit in accordance with Claim 33, wherein the plurality of membrane filters are formed one-dimensionally.

35. A biochemical analysis unit in accordance with Claim 33, wherein the plurality of membrane filters are formed two-dimensionally.

36. A target detecting apparatus comprising at least one laser stimulating ray source, a stage on which the biochemical analysis unit defined in any one of Claims 23 to 35 can be placed, a scanning mechanism for three-dimensionally scanning and stimulating the biochemical analysis unit with a laser beam emitted from the at least one laser stimulating ray source, a light detector for photoelectrically detecting light released from the biochemical analysis unit, and a confocal optical system for leading light released from the biochemical analysis unit to the light detector.

37. A target detecting apparatus comprising at least one laser stimulating ray source, a stage on which the biochemical analysis unit defined in any one of Claims 23 to 35 can be placed, a scanning mechanism for two-dimensionally scanning and stimulating the biochemical analysis unit with a laser beam emitted from the at least one laser stimulating ray source, a light detector for photoelectrically detecting light released from the biochemical analysis unit, and a confocal optical system for leading light released from the biochemical analysis unit to the light detector.

38. A target detecting apparatus in accordance with Claim 36 or 37, wherein the at least one laser stimulating ray source is constituted as a femtosecond pulse laser stimulating ray source.

39. A biochemical analysis apparatus comprising
means for fixing probes selected in advance on a substrate,
means for binding the probes with targets using a specific binding reaction and capturing them,
means for fractionating the captured targets,
means for detecting the fractionated targets, and
means for quantitatively analyzing the detected targets.

40. A biochemical analysis apparatus in accordance with Claim 39, which includes the means for binding the probes with targets using hybridization or antigen-antibody reaction.
